# EUROPÄISCHE PATENTSCHRIFT

(11) **EP 1 415 468 B1**
(45) Veröffentlichungstag und Bekanntmachung des Hinweises auf die Patenterteilung: **22.11.2006**
(21) Anmeldenummer: 02745130.1
(22) Anmeldetag: 10.06.2002
(51) Int. Cl.: H04N 5/74, G06T 15/20

(54) **VERFAHREN UND VORRICHTUNG ZUR PROJEKTION EINER DIGITAL GESPEICHERTEN 3D-SZENE AUF MEHREREN, IM WINKEL ZU EINANDER ANGEORDNETEN PROJEKTIONSFLÄCHEN**
METHOD AND DEVICE FOR PROJECTING A DIGITALLY STORED 3D SCENE ONTO SEVERAL PROJECTION SURFACES ARRANGED AT AN ANGLE TO EACH OTHER
PROCEDE ET DISPOSITIF DE PROJECTION D'UNE SCENE 3D ENREGISTREE SOUS FORME NUMERIQUE SUR UNE PLURALITE DE SURFACES DE PROJECTION ORIENTEES A UN CERTAIN ANGLE LES UNES PAR RAPPORT AUX AUTRES

(30) Priorität: 13.06.2001 DE 10134488
(43) Veröffentlichungstag der Anmeldung: 06.05.2004
(73) Patentinhaber: Square Vision AG, 50937 Köln (DE)
(72) Erfinder: HERPERS, Rainer, 53721 Siegburg (DE); HETMANN, Florian, 50678 Köln (DE)
(74) Vertreter: Bauer, Wulf
(86) Internationale Anmeldenummer: PCT/DE2002/002105
(87) Internationale Veröffentlichungsnummer: WO 2002/102071

(56) Entgegenhaltungen:
- EP-A- 1 071 045
- US-A- 5 264 881
- US-A- 5 495 576
- US-A- 5 963 247
- US-A- 6 020 890
- US-B1- 6 190 172
- US-B1- 6 246 412

## Beschreibung

Die Erfindung bezieht sich auf ein Verfahren und eine Vorrichtung zum Darstellen einer digital gespeicherten 3D-Szene auf einer mehrflächigen Projektionsanordnung. Diese hat eine erste Projektionsfläche und mindestens eine weitere, im Winkel zur ersten Projektionsfläche angeordnete zweite Projektionsfläche. Jeder Projektionsfläche ist mindestens ein Projektionsmittel zugeordnet, das rechnergesteuert ein Bild aus der 3D-Szene auf die zugehörige Projektionsfläche projiziert.

Nach dem Stand der Technik wird dabei ein einziger, gemeinsamer Rechner eingesetzt, der alle angeschlossenen Projektionsmittel ansteuert. Ein solcher Rechner muss relativ leistungsfähig sein, da er in der Lage sein muss, für alle einzelnen Projektionsmittel jeweils die zugehörigen Bilder zu rendern. Der Vorteil der vorbekannten Anordnung besteht darin, dass alle einzelnen Bilder, die an die Projektionsmittel weitergeleitet werden, zum gleichen Zeitpunkt fertig gestellt sind. Probleme der Synchronisation der einzelnen Bilder der verschiedenen Projektionsmittel bestehen daher nicht.

Unter Projektionsfläche wird ein Projektionsschirm verstanden, der im Auflichtbetrieb oder im Durchlichtbetrieb betrieben werden kann, der also für frontseitige Projektion und für rückseitige Projektion geeignet ist. In Frage kommen hier vor allem Leinwände, Folien und dergleichen, wie sie auch für Diaprojektion benutzt werden.

Unter Projektionsmittel werden Projektoren verstanden, die mit digital ansteuerbaren Bildgebern, insbesondere LCD-Anordnungen, ausgerüstet sind. Diese Projektionsmittel werden auch als Beamer bezeichnet. In einem beispielhaften Fall handelt es sich bei den Projektionsmitteln um Diaprojektoren, die anstelle eines Diapositivs eine LCD-Anordnung aufweisen, die im Durchlichtbetrieb betrieben werden. Die Projektionsmittel haben eine Optik, insbesondere Weitwinkeloptik.

Weiterhin sind aus dem Stand der Technik Verfahren zum Darstellen einer digital gespeicherten 3D-Szene auf nur einem Ausgabegerät, beispielsweise einem Monitor, bekannt. Eine große Anzahl von Spielen, wie beispielsweise Flugsimulatoren, Aktionsspiele usw. die auf einem Personalcomputer laufen, fällt in diesen Bereich.

Unter Personalcomputern werden dabei Computer mit einem Prozessor in x86 Architektur verstanden, insbesondere mit Pentium-Prozessoren (eingetragene Marke).

Nachteilig bei der Darstellung einer 3D-Szene durch einen Personalcomputer und auf nur einem Bildschirm ist, dass beim Benutzer kein dreidimensionaler Raumeindruck entsteht. Das Bild ist relativ klein. Vorteilhaft ist aber, dass die Kosten des Rechners einschließlich der 3D-Software relativ gering sind.

Hier setzt nun die Erfindung ein. Sie hat es sich zur Aufgabe gemacht, eine dreidimensional wirkende Darstellung einer 3D-Szene zu erreichen, ohne dass hierfür auf einen leistungsfähigen, aber dafür sehr teuren Spezialrechner zurückgegriffen werden muss, sondern es sollen handelsübliche Personalcomputer eingesetzt werden. Dadurch wird der Gesamtpreis einer Anlage für eine dreidimensionale Darstellung deutlich verringert gegenüber dem Verfahren der eingangs genannten Art.

Verfahrensmäßig wird diese Aufgabe gelöst durch ein Verfahren zum optisch sichtbaren Darstellen einer digital gespeicherten 3D-Szene in einer Projektionsanordnung, die eine erste Projektionsfläche und mindestens eine zweite, im Winkel zur ersten Projektionsfläche angeordnete zweite Projektionsfläche aufweist,
- mit einem ersten Projektionsmittel, das auf die erste Projektionsfläche ausgerichtet ist,
- mit einem ersten Rechner, der mit dem ersten Projektionsmittel verbunden ist und dieses steuert, der einen Arbeitsspeicher hat, der mit einem Eingabegerät zur Eingabe eines Standpunktes und einer ersten Blickrichtung verbunden ist und dem ein Massenspeicher zugeordnet ist, in dem mindestens eine 3D-Szene gespeichert ist,
- mit einem zweiten Projektionsmittel, das auf die zweite Projektionsfläche ausgerichtet ist,
- mit einem zweiten Rechner, der einen Arbeitsspeicher aufweist und der mit dem zweiten Projektionsmittel verbunden ist,
- mit einem Netzwerk, das den ersten Rechner und den zweiten Rechner miteinander verbindet, bei welchem Verfahren folgende Verfahrensschritte durchgeführt werden
   a) Laden der 3D-Szene in den Arbeitsspeicher des ersten Rechners und über das Netzwerk in den Arbeitsspeicher des zweiten Rechners,
   b) Abfrage der am Eingabegerät eingegebenen Information über den ersten Standpunkt und die Blickrichtung durch den ersten Rechner,
   c) Weiterleiten der Information über Standpunkt und erste Blickrichtung über das Netzwerk an den zweiten Rechner und Umwandeln der ersten Blickrichtung in eine zweite Blickrichtung, die um den Winkel gegenüber dem Winkel der ersten Blickrichtung versetzt ist,
   d) Errechnen eines Bildes im ersten Rechner, wie es sich aufgrund des Standpunktes und der ersten Blickrichtung ergibt, Weiterleiten des Bildes an das erste Projektionsmittel und Darstellung des Bildes auf der ersten Projektionsfläche und Errechnen eines Bildes im zweiten Rechner, wie es sich aufgrund des Standpunktes und der zweiten Blickrichtung ergibt, Weiterleiten des Bildes an das zweite Projektionsmittel und Darstellen des Bildes auf der zweiten Projektionsfläche,
   e) Abgabe eines Bestätigungssignals vom zweiten Rechner an den ersten Rechner und
   f) Wiederholen der Schritte b) bis f).

Dieses Verfahren nutzt für jede Projektion auf eine großformatige Projektionsfläche ein Projektionsmittel, das von einem Personalcomputer angesteuert wird. Es ist also jeder einzelnen Projektionsfläche ein normaler Personalcomputer mit darauf geladenen dreidimensionalen Dateien und ein Projektionsmittel zugeordnet. Als Ausgabeeinheit wird nicht ein normaler Monitor, sondern ein Projektionsmittel eingesetzt, das auf die zugehörige Projektionsfläche projiziert.

Man kann sich das erfindungsgemäße Verfahren aufgebaut denken aus einzelnen, zunächst voneinander unabhängigen Projektionsvorrichtungen, die jeweils aus einer Projektionsfläche, einem Projektionsmittel und einem Personalcomputer bestehen. Über eine Steuerung, die im einzelnen nachfolgend eingegangen wird, werden die mindestens zwei, typischerweise drei unabhängigen Projektionsvorrichtungen nun so zusammengefasst, dass die von ihnen abgegebenen Bilder auf den unterschiedlichen Projektionsflächen für einen Betrachter dreidimensional wirken.

Zur Steuerung wird zunächst ein Rechner als Hauptrechner (master) bestimmt, er ist Server in einem Netzwerk, das die einzelnen Rechner untereinander verbindet. Die weiteren Rechner, von denen mindestens einer vorhanden ist, sind hierarchisch untergeordnet, also Nebenrechner (slave). Der Hauptrechner wird als erster Rechner bezeichnet, er ist üblicherweise der Projektionsfläche zugeordnet, die dem Betrachter unmittelbar gegenüberliegt. Diese Zuordnung ist allerdings nicht notwendig.

Der erste Rechner ist mit dem Eingabegerät verbunden und hat einen Speicher für die aktuell am Eingabegerät eingegebenen Werte. Mittels des Eingabegerätes werden mindestens Angaben über den Standpunkt und die Blickrichtung eingegeben. Üblicherweise hat das Eingabegerät weitere Funktionen, wie beispielsweise Maustasten usw., um beispielsweise ein 3D-Szene auswählen, starten und beenden zu können. Der erste Rechner ist zuständig für die Übergabe der Information bezüglich Standpunkt und Blickrichtung an den mindestens einen Nebenrechner. Im Nebenrechner liegt die Information über den Standpunkt und eine veränderte zweite Blickrichtung vor. Die Blickrichtung wird so verändert, wie es der Winkelstellung der zugehörigen Projektionsfläche zur Projektionsfläche des Hauptrechners entspricht. Dieser Versatz der Blickrichtung, der für jeden Nebenrechner individuell gilt und bestimmt ist, wird für die gesamte Präsentation beibehalten. Er ändert sich erst dann, wenn die Winkelstellung der Projektionsfläche des Nebenrechners zur Projektionsfläche des Hauptrechners verändert wird.

Schließlich findet eine Synchronisation statt, um sicher zu stellen, dass bei der taktweise erfolgenden Bildausgabe im einem Taktzyklus die einzelnen Rechner jeweils vollständige Bilder rendern und zudem zu einander passende Bilder rendern und an die zugehörigen Projektionsmittel abgeben. Die Synchronisation erfolgt durch Bestätigungssignale, die die einzelnen Nebenrechner an den Hauptrechner abgeben. Erst wenn alle Bestätigungssignale (Acknowledge) beim Hauptrechner eingegangen sind und auch der Hauptrechner mit dem Rendern fertig ist, ist die Voraussetzung dafür geschaffen, dass überhaupt ein neuer Taktzyklus begonnen werden kann. Braucht also beispielsweise ein Nebenrechner außergewöhnlich lange, um ein Bild zu rendern, wird erst sein Bestätigungssignal abgewartet, bis ein neuer Taktzyklus begonnen werden kann. Es wird also nicht mit einem festen Taktzyklus gearbeitet, vielmehr ist der Taktzyklus üblicherweise fest vorgegeben, aber vorrangig abhängig von den eingegangenen Bestätigungssignalen.

In einer besonders bevorzugten Ausführung werden drei Projektionsflächen eingesetzt, nämlich eine dem Betrachter unmittelbar gegenüberliegende erste Projektionsfläche und jeweils eine linke und eine rechte Projektionsfläche, die jeweils in einem Winkel z. B. zwischen 30° und 90° zur ersten Projektionsfläche stehen und sich seitlich eines Benutzers befinden. Der Benutzer schaut im wesentlichen auf die erste Projektionsfläche und nimmt die linke und rechte Projektionsfläche mit seinen Augenwinkeln war. Dabei entsteht ein dreidimensionaler Eindruck.

Die Aufgaben, die das erfindungsgemäße Verfahren an den ersten Rechner, der als Master betrieben wird, stellt, sind im wesentlichen die gleichen wie die Aufgaben der Nebenrechner, nämlich das Rendern eines Bildes. Zusätzlich hat der erste Rechner noch die Aufgabe des Weiterleitens und vorzugsweise auch des Umwandelns der Information über Blickrichtung und Standpunkt, der Synchronisation und als Server. Die hierfür gegenüber einem Nebenrechner hinzukommenden Aufgaben sind allerdings im Vergleich zu dem Rendern eines Bildes relativ gering. Soweit können alle Rechner vom gleichen Typus sein, beispielsweise ein relativ schneller Rechner mit einem leistungsfähigen Prozessor in x86-Architektur mit ausreichend grossem Arbeitsspeicher, der auch ausreichend schnelle Zugriffszeit hat. Eine Programmbibliothek, auf der 3D-Szenen gespeichert sind und die beispielsweise auf einer Festplatte realisiert sein kann, muss nur einmal vorgesehen werden und ist dem ersten Rechner zugeordnet.

Als Netzwerk kann ein gängiges Standardnetzwerk benutzt werden, wie es für Personalcomputer derzeit auf dem Markt erhältlich ist, beispielsweise Netzwerke, wie sie verschiedene Versionen des Programms Windows (eingetragene Marke) beinhalten. Das Netzwerk sollte möglichst leistungsfähig sein, um das Übertragen der 3D-Szene in die Nebenrechner möglichst rasch zu gestalten. Vorteilhaft sind Netzwerke mit einer Übertragungsrate von mehr als 10 Mbit/s, insbesondere mindestens 100 Mbit/s Derartige Netzwerke mit zugehörigen Netzwerkkarten sind Stand der Technik. Die einzelnen Rechner müssen mit leistungsfähigen Grafikkarten ausgerüstet sein. Auch derartige Grafikkarten sind Stand der Technik.

In einer vorteilhaften Weiterbildung wird das Bestätigungssignal von den einzelnen Nebenrechnern abgegeben, sobald der einzelne Nebenrechner die Information über Standpunkt und Blickrichtung erhalten hat. In einer Alternative kann das Bestätigungssignal nur oder zusätzlich von dem einzelnen Nebenrechner auch dann abgegeben werden, wenn er mit dem Rendern des von ihm darzustellenden Bildes fertig ist. Erst wenn alle Nebenrechner und der Hauptrechner mit dem Rendern eines Bildes fertig sind, sodass das Bild dargestellt werden kann, kann ein neuer Taktzyklus starten.

Die Erweiterung des erfindungsgemäßen Verfahrens von zwei auf drei und mehrere Projektionsvorrichtungen, also mehrere Projektionsflächen mit zugehörigem Projektionsmittel und Rechner, ist relativ einfach durchzuführen. Die zusätzlichen Rechner werden wie der zweite Rechner behandelt, sind also Nebenrechner. Sie werden vom Hauptrechner mit der Information über Standpunkt und Blickwinkel versorgt und setzen den Blickwinkel in den Blickwinkel ihrer eigenen Darstellung um oder erhalten bereits vom Hauptrechner den jeweils ihrer Blickrichtung entsprechenden Blickwinkel zugeleitet.

In einer vorteilhaften Weiterbildung wird vorgeschlagen, dass das vom ersten Projektionsmittel auf die erste Projektionsfläche projizierte Bild des ersten Rechners und das vom zweiten Projektionsmittel auf die zweite Projektionsfläche projizierte Bild des zweiten Rechners (und eventuelle weitere Bilder) den gleichen Abbildungsmaßstab aufweisen und die Bilder benachbarter Projektionsflächen entlang einer Kante, die im Scheitel des Winkels der aneinandergrenzenden Projektionsflächen liegt, passgenau aneinandergesetzt sind. Im einfachsten Falle werden baugleiche Projektionsmittel mit gleich eingestellter Optik verwendet, die jeweils in fest vorgegebener, für alle Projektionsvorrichtung gleicher Entfernung sich von der jeweiligen Projektionsfläche befinden und zu dieser gleich ausgerichtet sind. Beispielsweise befinden sie sich in gleicher Entfernung von der Projektionsfläche auf einer Mittelsenkrechten durch den Flächenschwerpunkt der Projektionsfläche. Das Bild wird so justiert, dass es bis zur Kante reicht.

Vorrichtungsmässig wird die Aufgabe gelöst durch eine Vorrichtung zum optisch sichtbaren Darstellen einer digital gespeicherten 3D-Szene in einer Projektionsanordnung, die eine erste Projektionsfläche und mindestens eine zweite, im Winkel zur ersten Projektionsfläche angeordnete zweite Projektionsfläche aufweist,
- mit einem ersten Projektionsmittel, das auf die erste Projektionsfläche ausgerichtet ist und auf dieser ein erstes Bild aus der 3D-Szene projiziert,
- mit einem ersten Rechner, der mit dem ersten Projektionsmittel verbunden ist und dieses steuert und der einen Arbeitsspeicher hat, der mit einem Eingabegerät zur Eingabe eines Standpunktes und einer ersten Blickrichtung verbunden ist und dem ein Massenspeicher zugeordnet ist, in dem mindestens eine 3D-Szene gespeichert ist,
- mit einem zweiten Projektionsmittel, das auf die zweite Projektionsfläche ausgerichtet ist und auf diese ein Bild aus der 3D-Szene projiziert,
- mit einem zweiten Rechner, der einen Arbeitsspeicher hat und der mit dem zweiten Projektionsmittel verbunden ist,
- mit einem Netzwerk, das den ersten Rechner und den mindestens einen weiteren, zweiten Rechner miteinander verbindet, wobei eine Vorrichtung vorgesehen ist, die die Information über den Standpunkt und die erste Blickrichtung umwandelt in eine Information über den Standpunkt und eine zweite Blickrichtung, welche gegenüber der ersten Blickrichtung um den Winkel versetzt ist und über das Netzwerk im zweiten Rechner anliegt,
- mit Mitteln zur Abgabe eines Bestätigungssignals des zweiten Rechners an den ersten Rechner und
- mit Mitteln zum periodischen Wiederholen der Abfrage am Eingabegerät der dort vorliegenden Information über den Standpunkt und die erste Blickrichtung.

Diese Vorrichtung ist für die Durchführung des Verfahrens, wie es oben beschrieben wurde, geeignet. Sie hat die bereits erwähnten Vorteile eines günstigen Preises. Es werden handelsübliche Bauteile verwendet. Der Aufbau ist modular, es kann gängige Software verwendet werden, die für Personalcomputer geeignet ist. Insgesamt kann auf den großen Markt an Bauteilen für Personalcomputer und den großen Markt an Software für Personalcomputer zurückgegriffen werden. Lediglich die eigentliche Projektionsanordnung aus mindestens zwei Projektionsflächen ist kein normales Bauteil, das auf dem Markt ohne weiteres erhältlich ist. Hierfür hat die gleiche Anmelderin eine Konstruktion angegeben, die in der DE-Patentanmeldung 101 28 347.4 vom 13. Juni 2001 mit dem Titel "Projektionssystem" beschrieben ist. Die Offenbarung dieser Patentanmeldung vom gleichen Tage wird vollinhaltlich zum Umfang der Offenbarung der vorliegenden Patentanmeldung gemacht.

Als entscheidend für die Erfindung wird die Abgabe eines Bestätigungssignals vom zweiten Rechner an den ersten Rechner angesehen, hierdurch wird die Synchronisation der Darstellung des Bildes auf den mindestens zwei Projektionsflächen erreicht.

Auf die Eingabe eines Standpunktes und von Blickrichtungen durch das Eingabegerät kann verzichtet werden. Dies bietet sich beispielsweise dann an, wenn ein Nutzer einen vorgegebenen Weg durch eine 3D-Szene nehmen soll und gar keine Möglichkeit haben soll, einen anderen Weg als den vorgegebenen Weg einzuschlagen. Bei Führungen durch Museen, durch rekonstruierte alte Gebäude usw. wird auf diese Weise ein Weg für den Besucher durch die 3D-Szene vorgegeben, wobei der Besucher keinen Einfluss auf den Weg hat. Dadurch vereinfachen sich das Verfahren und die zugehörige Vorrichtung. Es genügt nun, nur noch die Bildinformation abzuspeichern, die dem konkreten Besuchsweg, der vorgegeben ist, zugeordnet ist. Es wird nun deutlich weniger Speicher benötigt. Vorzugsweise wird bei einem derartigen Verfahren und einer zugehörigen Vorrichtung zunächst entsprechend dem Verfahren des Anspruchs 1 gearbeitet und wird zunächst aus einer digital gespeicherten 3D-Szene ein spezieller, beispielsweise für Besucher geeigneter Weg innerhalb dieser 3D-Szene ausgewählt. Die zugehörigen Videoinformation werden gespeichert, beispielsweise auf einer CD. Auf diese Weise können vorzugsweise mehrere Projektionsvorrichtungen der hier in Rede stehenden Art beispielsweise in einem Museum aufgebaut werden und können mehrere Besucher den virtuellen Gang durch das Museum erleben. Das Verfahren ist im Anspruch 9 zusammengefasst. Die Ansprüche 2 bis 7 sollen sich auch auf diesen Anspruch 9 beziehen. Die Vorrichtung ist im Anspruch 10 angegeben.

Um den Platzbedarf der Vorrichtung zu reduzieren, wird vorgeschlagen, zwischen den Projektionsmitteln und den Projektionsflächen geeignet angeordnete Spiegel zu positionieren um den Strahlengang falten zu können. Es können auch Weitwinkelobjektive verwendet werden. Schließlich eignen sich Projektionsmittel, wie sie beispielsweise aus der US-Patentschrift 4,003,080 und der Europäischen Patentanmeldung 0 938 694 bekannt sind.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im folgenden näher erläutert wird. In dieser Zeichnung zeigen:
- Figur 1:: Eine dreidimensionale Darstellung mit Blick von mittig oben einer Vorrichtung zur Projektion einer 3D-Szene auf drei im Winkel zueinander stehenden Projektionsflächen,
- Figur 2:: eine Draufsicht auf eine Vorrichtung ähnlich Figur 1 und
- Figur 3:: ein Zeitdiagramm zur Darstellung der Synchronisation der einzelnen Rechner.

Grundlage für die Darstellung ist eine dreidimensionale Datei, auch 3D-Szene genannt. Man kann sie sich vorstellen als ein dreidimensionales Netz mit äußeren Begrenzungen. Von jedem einzelnen dreidimensionalen Netzpunkt kann in beliebiger Blickrichtung ein Bild errechnet werden. Hierzu sind mit den Netzpunkten Informationen verknüpft. Der Benutzer kann jeden einzelnen Netzpunkt auswählen als Standpunkt und von diesem in einer gewünschten Blickrichtung schauen.

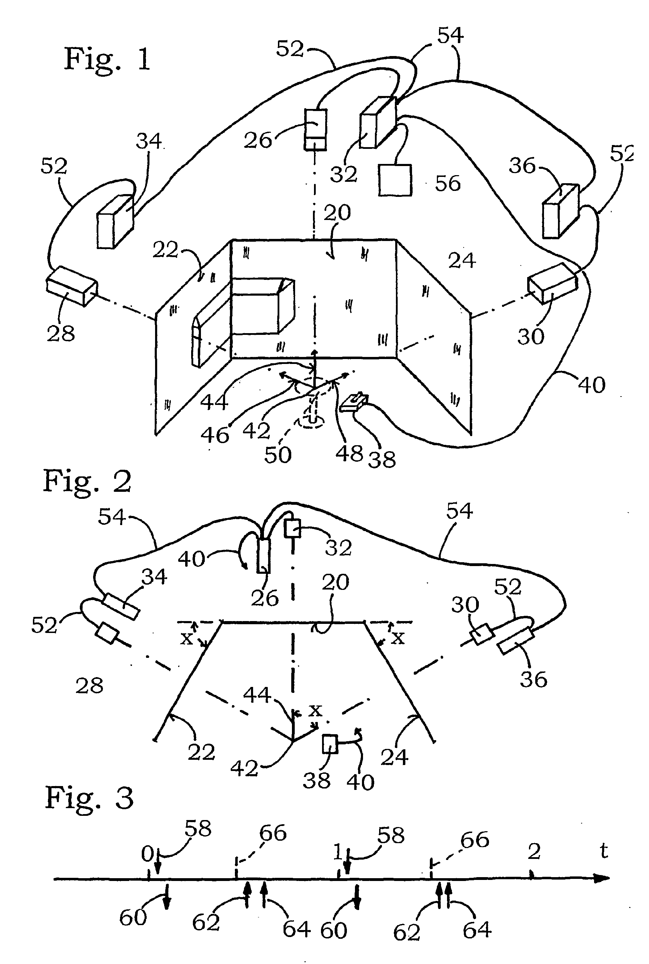

Wie die Figuren 1 und 2 zeigen, hat die Vorrichtung eine Projektionsanordnung mit insgesamt drei Projektionsflächen, nämlich einer ersten Projektionsfläche 20, auch Hauptprojektionsfläche genannt, einer zweiten Projektionsfläche 22 und einer dritten Projektionsfläche 24. Sie sind eben und werden in den gezeigten Ausführungsbeispielen in Rückwandprojektion betrieben, sind also für eine solche Projektion geeignet. Es ist auch möglich, die gezeigte Anordnung in Vorwandprojektion zu betreiben. Die Projektionsflächen sind mehrere Quadratmeter groß. Sie stehen in einem Winkel zu einander, hierzu ist in Figur 2 der Winkel x eingezeichnet. In der gezeigten Anordnung ist x der Winkel zwischen der ersten Projektionsfläche 20 und der zweiten Projektionsfläche 20. Den gleichen Wert hat der Winkel zwischen der ersten Projektionsffäche 20 und der angrenzenden dritten Projektionsfläche 24. Die Projektionsflächen gehen unmittelbar ineinander über, vorzugsweise ohne einen Spalt an der Kante zwischen benachbarten Projektionsflächen.

Jeder Projektionsfläche 20 bis 24 ist mindestens ein Projektionsmittel zugeordnet. Bei Stereoprojektion können jeder einzelnen Projektionsfläche auch zwei oder mehrere Projektionsmittel zugeordnet sein. Der ersten Projektionsfläche 20 ist das erste Projektionsmittel 26 zugeordnet, ebenso der zweiten das zweite Projektionsmittel 28 und ebenso das dritte Projektionsmittel 30. Jedes Projektionsmittel 26 bis 30 ist wiederum mit einem eigenen Rechner verbunden. Somit gibt es einen ersten Rechner 32, der als Server und Master betrieben wird, einen zweiten Rechner 34 und einen dritten Rechner 36. Die erste Projektionsfläche 20 zusammen mit dem ersten Projektionsmittel 26 und dem ersten Rechner 32 bilden eine erste Projektionsvorrichtung, gleiches gilt für die zweiten usw.. Jede einzelne Projektionsvorrichtung ist prinzipiell für sich autark, kann also grundsätzlich ohne Zusammenwirken mit den anderen, insbesondere mit dem Master bzw. Hauptrechner 32, betrieben werden. Es ist allerdings nur dem Hauptrechner 32 ein Eingabegerät 38 zugeordnet und mit ihm über eine Leitung verbunden. Die zweite Projektionsvorrichtung und die dritte Projektionsvorrichtung haben kein eigenes Eingabegerät, vielmehr erhalten sie die üblicherweise von einem Eingabegerät stammende Informationen vom Hauptrechner 32, wie noch im folgenden ausgeführt wird.

Wie die Figuren 1 und 2 zeigen, sind die Projektionsmittel im gleichen Abstand von der jeweiligen Projektionsfläche und in gleicher Zuordnung zu dieser angeordnet. Die Projektionsmittel 26 bis 30 sind baugleich. Zwar ist es grundsätzlich möglich auch unterschiedliche Projektionsmittel zu nutzen, dann aber muss man den Abstand und den Abbildungsmaßstab jeweils individuell justieren.

In den Vorrichtung gemäß den Figuren 1 und 2 befinden sich die Projektionsmittel in einem vorgegebenen Abstand hinter der jeweiligen Projektionsfläche und auf einer Mittelsenkrechten, die Mittelsenkrechten der einzelnen Projektionsflächen schneiden sich in einem Punkt 42. Sie müssen sich nicht zwangsläufig in einem Punkt schneiden, sie müssen sich aber innerhalb eines Bereichs treffen. Der Punkt 42 bzw. Schnittpunkt, ist der Standpunkt für die Darstellung. Er ist der Punkt, an dem ein Beobachter (nicht eingezeichnet) stehen sollte. Die Mittelsenkrechten bestimmen auch die Blickrichtung. Die erste Blickrichtung 44 geht vom Schnittpunkt 42 auf den Flächenmittelpunkt der ersten Projektionsfläche. Entsprechend verhält es sich mit der zweiten Blickrichtung 46 und der dritten Blickrichtung 48. Sie sind jeweils um den Winkel x gegenüber der ersten Blickrichtung in einer Beobachtungsebene versetzt, die Beobachtungsebene wird durch die drei Mittelsenkrechten bzw. drei Blickrichtungen aufgespannt.

Um den Schnittpunkt 42 besser kenntlich zu machen, ist an seiner Stelle gestrichelt ein Tisch 50 eingezeichnet. Auf diesem könnte das Eingabegerät 38 stehen. Es ist lediglich, um den Schnittpunkt 42 besser darstellen zu können, rechts von ihm versetzt angeordnet. Anstelle des Tisches 50 wird häufig ein Stuhl platziert, auf den sich ein Benutzer setzen kann, der das Eingabegerät 38 betätigen kann.

Jedes Projektionsmittel ist über eine Leitung 52 mit dem zugehörigen Rechner verbunden. Die einzelnen Rechner 32 bis 36 sind über ein Netzwerk 54 miteinander verbunden, sie haben jeweils eine entsprechende Netzwerkkarte. Die Rechner haben typischerweise einen leistungsfähigen Prozessor in x86 Architektur, einen Arbeitsspeicher, der beispielsweise mindestens 256 MB aufweist und der eine Taktfrequenz von 100 MHz, möglicherweise höher, aufweist.

Dem Hauptrechner ist ein Massenspeicher 56 zugeordnet. Auf diesem sind mehrere 3D-Szenen abgespeichert, die einzeln abgerufen werden können. Dies kann vom Eingabegerät 38 aus erfolgen.

Im folgenden wird nun das interaktive Darstellen von zusammengehörigen Bildern aus einer 3D-Szene erläutert:

Zunächst wählt der Benutzer eine Szene aus dem Massenspeicher 56 aus und lädt sie einerseits direkt in den Arbeitsspeichers des Hauptrechners 32 und über das Netzwerk 54 in die Arbeitsspeicher der Nebenrechner 34, 36. Als Massenspeicher 56 kann beispielsweise eine CD, eine Festplatte oder dergleichen dienen.

Der Benutzer gibt nun am Eingabegerät 38 die gewünschte Position und die gewünschte Blickrichtung ein. Das Eingabegerät wird periodisch vom Hauptrechner 32 abgefragt, dieser hat einen Speicher für die Information über den Standpunkt und die Blickrichtung. Diese Information wird nun über das Netzwerk 54 an die Nebenrechner weitergeleitet und liegt in diesen in geänderter Form vor. Es bleibt zwar der Standpunkt erhalten, die Blickrichtung wird aber auf den Nebenrechner, nämlich die Ausrichtung der diesem zugehörigen Projektionsfläche, angepasst. Da die Nebenrechner um einen Winkel, im Ausführungsbeispiel x, gegenüber der ersten Blickrichtung versetzte Bilder darstellen sollen, müssen sie auch eine entsprechend versetzte Blickrichtung für das Erstellen ihres jeweiligen Bildes erhalten. Hierzu wird entweder schon im Hauptrechner 32 oder aber in jedem Nebenrechner die erste Blickrichtung umgewandelt in eine Blickrichtung des jeweiligen Nebenrechners, also beispielsweise in eine zweite Blickrichtung für den zweiten Rechner 34. Dies erfolgt durch Addieren von x in der Beobachtungsebene zur dreidimensionalen Blickrichtung.

Jeder einzelne Rechner kann nun für den gemeinsamen Standpunkt und die individuelle Blickrichtung das zutreffende Bild errechnen, also rendern. Das erhaltene Bild wird über das zugehörige Projektionsmittel auf die diesem zugeordnete Projektionsfläche projiziert.

Vorzugsweise werden baugleiche Rechner 32 bis 36 verwendet. Es ist aber auch möglich, unterschiedliche Rechner einzusetzen. Bei unterschiedlichen Rechnern ist die Zeitdauer des Renderns eines kompletten Bildes vom einen zum anderen Rechner verschieden.

Um nun sicher zu stellen, dass grundsätzlich jeder einzelne Rechner ausreichend Zeit hat um ein vollständiges Bild zu rendern, wird ein Bestätigungssignal von jedem einzelnen Nebenrechner an den Hauptrechner gesandt. Dieses Bestätigungssignal wird vorzugsweise dann abgegeben, wenn der einzelne Nebenrechner mit dem Rendern des Bildes fertig ist. Es ist aber auch möglich, bei der taktweisen arbeitenden Vorrichtung ein Bestätigungssignal bereits bei Erhalt der Information über Standpunkt und Blickwinkel abzugeben und dann ausreichend Zeit zu lassen, bis das Bild jeweils gerendert ist.

Figur 3 zeigt schematisch den Ablauf der Synchronisation. Dargestellt sind zwei volle Taktzyklen, nämlich 0 bis 1 und 1 bis 2. Dargestellt ist der Ablauf im Hauptrechner 32. Zu Beginn des Taktzyklus fragt der Hauptrechner das Eingabegerät 38 ab, siehe Pfeil 58, und erhält die Information über den vom Benutzer gewünschten Standpunkt und den Blickwinkel. Der Hauptrechner 32 speichert diese Information und gibt sie an die Nebenrechner ab, siehe Pfeil 60. Jeder einzelne Nebenrechner errechnet unter Berücksichtigung des Standpunktes und der für ihn geltenden Blickrichtung nun ein Bild, also führt ein Rendern durch. Ist das Rendern abgeschlossen, gibt der einzelne Rechner ein Bestätigungssignal, siehe Pfeil 62 für den zweiten Rechner 34 und Pfeil 64 für den dritten Rechner 36. Der Hauptrechner 32 generiert intern ein entsprechendes Signal 66, das den Abschluss des eigenen Renderns für das Bild mit dem Standpunkt und der ersten Blickrichtung signalisiert. Sind alle Bestätigungssignale eingetroffen bzw. liegen sie vor, ist sichergestellt, dass ein vollständiges Bild bei jedem einzelnen Rechner vorliegt, dass dann auch unmittelbar über das Projektionsmittel auf die Projektionsfläche projiziert wird. Es kann nun ein neuer Takt beginnen. Bleibt ein Bestätigungssignal aus, wird kein neuer Takt begonnen. Üblicherweise haben die Takte eine Länge von 25 ms.

## Patentansprüche

1. Verfahren zum optisch sichtbaren Darstellen einer digital gespeicherten 3D-Szene in einer Projektionsanordnung, die eine erste Projektionsfläche (20) und mindestens eine zweite, im Winkel zur ersten Projektionsfläche angeordnete zweite Projektionsfläche (22) aufweist,
- mit einem ersten Projektionsmittel (26), das auf die erste Projektionsfläche (20) ausgerichtet ist,
- mit einem ersten Rechner (32), der i) mit dem ersten Projektionsmittel (26) verbunden ist und dieses steuert, der ii) einen Arbeitsspeicher hat, der iii) mit einem Eingabegerät (38) zur Eingabe eines Standpunktes und einer ersten Blickrichtung verbunden ist und dem iv) ein Massenspeicher (56) zugeordnet ist, in dem mindestens eine 3D-Szene gespeichert ist,
- mit einem zweiten Projektionsmittel (26), das auf die zweite Projektionsfläche (22) ausgerichtet ist,
- mit einem zweiten Rechner (34), der einen Arbeitsspeicher aufweist und der mit dem zweiten Projektionsmittel (26) verbunden ist,
- mit einem Netzwerk (54), das den ersten Rechner (32) und den zweiten Rechner (34) miteinander verbindet, bei welchem Verfahren folgende Verfahrensschritte durchgeführt werden
a) Laden der 3D-Szene in den Arbeitsspeicher des ersten Rechners (32) und über das Netzwerk (54) in den Arbeitsspeicher des zweiten Rechners (34),
b) Abfrage der am Eingabegerät (38) eingegebenen Information über den ersten Standpunkt und die Blickrichtung durch den ersten Rechner (32),
c) Weiterleiten der Information über Standpunkt und erste Blickrichtung (44) über das Netzwerk (54) an den zweiten Rechner (34) und Umwandeln der ersten Blickrichtung in eine zweite Blickrichtung (46), die um den Winkel gegenüber dem Winkel der ersten Blickrichtung versetzt ist,
d) Abgabe eines Bestätigungssignals vom zweiten Rechner (34) an den ersten Rechner (32),
e) Errechnen eines Bildes im ersten Rechner (32), wie es sich aufgrund des Standpunktes und der ersten Blickrichtung ergibt, Weiterleiten des Bildes an das erste Projektionsmittel und Darstellung des Bildes auf der ersten Projektionsfläche und
Errechnen eines Bildes im zweiten Rechner (34), wie es sich aufgrund des Standpunktes und der zweiten Blickrichtung ergibt, Weiterleiten des Bildes an das zweite Projektionsmittel und Darstellen des Bildes auf der zweiten Projektionsfläche und
f) Wiederholen der Schritte b) bis e).

2. Verfahren nach Anspruch 1, **dadurch gekennzeichnet, dass** die Schritte b) bis e) mindestens mehrmals pro Sekunde, insbesondere mehr als 20 mal pro Sekunde durchgeführt werden.

3. Verfahren nach Anspruch 1, **dadurch gekennzeichnet, dass** das Bestätigungssignal vom zweiten Rechner (34) abgegeben wird, sobald der zweite Rechner die Information über den Standpunkt und die Blickrichtung erhalten hat.

4. Verfahren nach Anspruch 1, **dadurch gekennzeichnet, dass** die Umwandlung der ersten Blickrichtung in die zweite Blickrichtung (46) im ersten Rechner (32) erfolgt.

5. Verfahren nach Anspruch 1, **dadurch gekennzeichnet, dass** die Projektionsanordnung eine dritte Projektionsfläche (24) aufweist und dass mindestens ein weiterer Rechner, nämlich ein dritter Rechner vorgesehen ist, der mit einem Arbeitsspeicher versehen, der mit dem Netzwerk (54) verbunden ist, der mit einem dritten Projektionsmittel (28) verbunden ist und bei dem die Verfahrensschritte a), c), d) und e) durchgeführt werden.

6. Verfahren nach Anspruch 1, **dadurch gekennzeichnet, dass** das vom ersten Projektionsmittel (26) auf die erste Projektionsfläche (20) projizierte Bild des ersten Rechner (32)s und das vom zweiten Projektionsmittel (26) auf die zweite Projektionsfläche (22) projizierte Bild des zweiten Rechner (34)s und eventuelle weitere Bilder den gleichen Abbildungsmaßstab aufweisen und die Bilder benachbarter Projektionsflächen entlang einer Kante, die im Scheitel des Winkels der aneinandergrenzenden Projektionsflächen liegt, passgenau aneinandergesetzt sind.

7. Verfahren nach Anspruch 1, **dadurch gekennzeichnet, dass** als Rechner handelsübliche Personalcomputer verwendet werden und dass der erste Rechner als Server betrieben wird..

8. Vorrichtung zum optisch sichtbaren Darstellen einer digital gespeicherten 3D-Szene in einer Projektionsanordnung, die eine erste Projektionsfläche (20) und mindestens eine zweite, im Winkel zur ersten Projektionsfläche angeordnete zweite Projektionsfläche (22) aufweist,
- mit einem ersten Projektionsmittel (26), das auf die erste Projektionsfläche (20) ausgerichtet ist und auf dieser ein erstes Bild aus der 3D-Szene projiziert,
- mit einem ersten Rechner (32), der mit dem ersten Projektionsmittel (26) verbunden ist und dieses steuert und der einen Arbeitsspeicher hat, der mit einem Eingabegerät (38) zur Eingabe eines Standpunktes und einer ersten Blickrichtung verbunden ist und dem ein Massenspeicher (56) zugeordnet ist, in dem mindestens eine 3D-Szene gespeichert ist,
- mit einem zweiten Projektionsmittel (26), das auf die zweite Projektionsfläche (22) ausgerichtet ist und auf diese ein Bild aus der 3D-Szene projiziert,
- mit einem zweiten Rechner (34), der einen Arbeitsspeicher hat und der mit dem zweiten Projektionsmittel (26) verbunden ist,
- mit einem Netzwerk (54), das den ersten Rechner (32) und den mindestens einen weiteren, zweiten Rechner (34) miteinander verbindet, wobei eine Vorrichtung vorgesehen ist, die die Information über den Standpunkt und die erste Blickrichtung (44) umwandelt in eine Information über den Standpunkt und eine zweite Blickrichtung (46), welche gegenüber der ersten Blickrichtung um den Winkel versetzt ist und über das Netzwerk (54) im zweiten Rechner (34) anliegt,
- mit Mitteln zur Abgabe eines Bestätigungssignals des zweiten Rechners (34) an den ersten Rechner (32) und
- mit Mitteln zum periodischen Wiederholen der Abfrage am Eingabegerät (38) der dort vorliegenden Information über den Standpunkt und die erste Blickrichtung (44).

9. Verfahren zum optisch sichtbaren Darstellen einer vorzugsweise digital gespeicherten 3D-Szene, z.B. einer als Videosignal gespeicherten 3D-Szene, in einer Projektionsanordnung, die eine erste Projektionsfläche (20) und mindestens eine zweite, im Winkel zur ersten Projektionsfläche angeordnete zweite Projektionsfläche (22) aufweist,
- mit einem ersten Projektionsmittel (26), das auf die erste Projektionsfläche (20) ausgerichtet ist,
- mit einem ersten Rechner (32), der i) mit dem ersten Projektionsmittel (26) verbunden ist und dieses steuert, der ii) einen Arbeitsspeicher hat, der iii) mit einem Eingabegerät (38) verbunden ist und dem iv) ein Massenspeicher (56) zugeordnet ist, in dem mindestens eine 3D-Szene gespeichert ist,
- mit einem zweiten Projektionsmittel (26), das auf die zweite Projektionsfläche (22) ausgerichtet ist,
- mit einem zweiten Rechner (34), der einen Arbeitsspeicher aufweist und der mit dem zweiten Projektionsmittel (26) verbunden ist,
- mit einem Netzwerk (54), das den ersten Rechner (32) und den zweiten Rechner (34) miteinander verbindet, bei welchem Verfahren folgende Verfahrensschritte durchgeführt werden
a) Laden der 3D-Szene in den Arbeitsspeicher des ersten Rechners (32) und in den Arbeitsspeicher des zweiten Rechners (34),
b) Abfrage der am Eingabegerät (38) eingegebenen Information über Start und Ablauf der Wiedergabe durch den ersten Rechner (32),
c) Weiterleiten der über das Netzwerk (54) an den zweiten Rechner (34)
d) Abgabe eines Bestätigungssignals vom zweiten Rechner (34) an den ersten Rechner (32),
e) Errechnen eines Bildes im ersten Rechner (32), Weiterleiten des Bildes an das erste Projektionsmittel und Darstellung des Bildes auf der ersten Projektionsfläche und
f) Errechnen eines Bildes im zweiten Rechner (34), Weiterleiten des Bildes an das zweite Projektionsmittel und Darstellen des Bildes auf der zweiten Projektionsfläche und
g) Wiederholen der Schritte b) bis e).

10. Vorrichtung zum optisch sichtbaren Darstellen einer vorzugsweise digital gespeicherten 3D-Szene in einer Projektionsanordnung, die eine erste Projektionsfläche (20) und mindestens eine zweite, im Winkel zur ersten Projektionsfläche angeordnete zweite Projektionsfläche (22) aufweist,
- mit einem ersten Projektionsmittel (26), das auf die erste Projektionsfläche (20) ausgerichtet ist und auf dieser ein erstes Bild aus der 3D-Szene projiziert,
- mit einem ersten Rechner (32), der mit dem ersten Projektionsmittel (26) verbunden ist und dieses steuert und der einen Arbeitsspeicher hat, der mit einem Eingabegerät (38) verbunden ist und dem ein Massenspeicher (56) zugeordnet ist, in dem mindestens eine 3D-Szene gespeichert ist,
- mit einem zweiten Projektionsmittel (26), das auf die zweite Projektionsfläche (22) ausgerichtet ist und auf diese ein Bild aus der 3D-Szene projiziert,
- mit einem zweiten Rechner (34), der einen Arbeitsspeicher hat und der mit dem zweiten Projektionsmittel (26) verbunden ist,
- mit einem Netzwerk (54), das den ersten Rechner (32) und den mindestens einen weiteren, zweiten Rechner (34) miteinander verbindet, mit Mitteln zur Abgabe eines Bestätigungssignals des zweiten Rechners (34) an den ersten Rechner (32) und
- mit Mitteln zum periodischen Wiederholen der Abfrage am Eingabegerät (38) der dort vorliegenden Information.

## Claims

1. A method for optically visualizing a digitally recorded 3D scene in a projection array having one first projection surface (20) and at least one second projection surface (22) inclined at an angle to said first projection surface
- with a first projection means (26) that is oriented toward said first projection surface (20),
- with a first computer (32) that i) is connected to said first projection means (26) which it controls, ii) has a main storage, iii) is connected to an input device (38) for inputting a location and a first viewing direction and iv) is assigned a mass storage (56) in which at least one 3D scene is stored,
- with a second projection means (26) that is oriented toward said second projection surface (22),
- with a second computer (34) that has a main storage and is connected to said second projection means (26),
- with a network (54) that connects together said first computer (32) and said second computer (34), the following method steps being carried out in this method:
a) loading said 3D scene in said main storage of said first computer (32) and through said network (54) in the main storage of said second computer (34),
b) interrogating said input device (38) for the first location and viewing direction data input therein with said first computer (32),
c) transmitting said location and first viewing direction data (44) through said network (54) to said second computer (34) and converting said first viewing direction into a second viewing direction (46), which is offset by the angle with respect to the angle of the first viewing direction,
d) delivering a confirmation signal from said second computer (34) to said first computer (32),
e) computing an image in said first computer (32) as it is, given the location and the first viewing direction, transmitting said image to said first projection means and representing said image on said first projection surface and
computing an image in said second computer (34) as it is, given the location and the second viewing direction, transmitting said image to said second projection means and presenting said image on said second projection surface and
f) repeating the steps b) through e).

2. The method as set forth in claim 1, **characterized in that** the steps b) through e) are performed at least several times a second, more specifically more than 20 times a second.

3. The method as set forth in claim 1, **characterized in that** the confirmation signal is delivered by the second computer (34) as soon as said second computer has received the location and viewing direction data.

4. The method as set forth in claim 1, **characterized in that** the conversion of the first viewing direction to the second viewing direction (46) is carried out in the first computer (32).

5. The method as set forth in claim 1, **characterized in that** the projection array has a third projection surface (24) and that at least one additional computer, namely a third computer is provided, said third computer being provided with a main storage, being connected to the network (54) and to a third projection means (28) and serving to perform the method steps a), c), d) and e).

6. The method as set forth in claim 1, **characterized in that** the image of the first computer (32), which is projected by the first projection means (26) onto the first projection surface (20), and the image of the second computer (34), which is projected by the second projection means (26) onto the second projection surface (22), and possibly additional images are imaged to the same scale and that the images of neighboring projection surfaces are juxtaposed so as to register with each other along an edge located in the apex of the angle formed by the adjacent projection surfaces.

7. The method as set forth in claim 1, **characterized in that** the computers used are commercially available personal computers and that the first computer is operated as the server.

8. An apparatus for optically visualizing a digitally stored 3D scene in a projection array having one first projection surface (20) and at least one second projection surface (22) inclined at an angle to said first projection surface,
- with a first projection means (26) that is oriented toward said first projection surface (20) and projects thereon a first image of said 3D scene,
- with a first computer (32) that is connected to said first projection means (26) which it controls and that has a main storage that is connected to an input device (38) for inputting a location and a first viewing direction and that is assigned a mass storage (56) in which at least one 3D scene is stored,
- with a second projection means (26) that is oriented toward said second projection surface (22) and projects thereon an image of said 3D scene,
- with a second computer (34) that has a main storage and is connected to said second projection means (26),
- with a network (54) that connects together said first computer (32) and at least one additional, second computer (34), an apparatus being provided, which converts the location and first viewing direction data (44) into location and second viewing direction data (46), which is offset with respect to the first viewing direction by the angle and is applied in said second computer (34) through said network (54),
- with means for delivering a confirmation signal of said second computer (34) to said first computer (32) and
- with means for periodically repeating the interrogation of the input device (38) for the location and first viewing direction data (44) available there.

9. A method for optically visualizing a preferably digitally recorded 3D scene, e.g. a 3D scene stored as a video signal, in a projection array having a first projection surface (20) and at least one second projection surface (22) inclined at an angle to said first projection surface
- with a first projection means (26) that is oriented toward said first projection surface (20),
- with a first computer (32) that i) is connected to said first projection means (26) which it controls, ii) has a main storage, iii) is connected to an input device (38) for inputting a location and a first viewing direction and iv) is assigned a mass storage (56) in which at least one 3D scene is stored,
- with a second projection means (26) that is oriented toward said second projection surface (22),
- with a second computer (34) that has a main storage and is connected to said second projection means (26),
- with a network (54) that connects together said first computer (32) and said second computer (34), the following method steps being carried out in this method:
a) loading the 3D scene in said main storage of said first computer (32) and in the main storage of said second computer (34),
b) interrogating the input device (38) for the playback start and run data input therein with said first computer (32),
c) transmitting said data through said network (54) to said second computer (34),
d) delivering a confirmation signal from said second computer (34) to said first computer (32),
e) computing an image in said first computer (32), transmitting said image to said first projection means and presenting said image on said first projection surface and
f) computing an image in said second computer (34), transmitting said image to said second projection means and presenting said image on said second projection surface and
g) repeating the steps b) through e).

10. An apparatus for optically visualizing a preferably digitally stored 3D scene in a projection array having one first projection surface (20) and at least one second projection surface (22) inclined at an angle to said first projection surface,
- with a first projection means (26) that is oriented toward said first projection surface (20) and projects thereon a first image of said 3D scene,
- with a first computer (32) that is connected to said first projection means (26) which it controls and that has a main storage which is connected to an input device (38) and that is assigned a mass storage (56) in which at least one 3D scene is stored,
- with a second projection means (26) that is oriented toward said second projection surface (22) and projects thereon an image of said 3D scene,
- with a second computer (34) that has a main storage and is connected to said second projection means (26),
- with a network (54) that connects together said first computer (32) and said second computer (34), with means for delivering a confirmation signal of said second computer (34) to said first computer (32) and
- with means for periodically repeating interrogation of the input device (38) for the data available there.

## Revendications

1. Procédé de visualisation optique de scènes 3D mémorisées numériquement dans un montage de projection comportant une première surface de projection (20) et au moins une deuxième surface de projection (22) formant un angle avec la première surface de projection,
- avec un premier moyen de projection (26) qui est dirigé sur la première surface de projection (20),
- avec un premier ordinateur (32), qui i) est relié au premier moyen de projection (26) qu'il commande, qui ii) a une mémoire de travail, qui iii) est relié à un périphérique d'entrée (38) destiné à entrer une position et une première direction de prise de vue et auquel iv) est associée une mémoire de masse (56) dans laquelle est stockée au moins une scène 3D,
- avec un deuxième moyen de projection (26) qui est dirigé sur la deuxième surface de projection (22),
- avec un deuxième ordinateur (34) qui comporte une mémoire de travail et qui est relié au deuxième moyen de projection (26),
- avec un réseau (54) qui relie ensemble le premier ordinateur (32) et le deuxième ordinateur (34), lequel procédé consiste à suivre les étapes suivantes
a) charger la scène 3D dans la mémoire de travail du premier ordinateur (32) et par l'intermédiaire du réseau (54) dans la mémoire de travail du deuxième ordinateur (34),
b) interroger le périphérique d'entrée (38) sur la première position et la direction de prise de vue par l'intermédiaire du premier ordinateur (32),
c) transmettre l'information sur la position et la première direction de prise de vue (44) au deuxième ordinateur (34) par l'intermédiaire du réseau (54) et convertir la première direction de prise de vue en une deuxième direction de prise de vue (46) qui est décalée de l'angle par rapport à l'angle de la première prise de vue,
d) délivrer un signal de confirmation moyennant le deuxième ordinateur (34) et l'envoyer au premier ordinateur (32),
e) calculer une image dans le premier ordinateur (32) telle qu'elle se présente en vertu de sa position et de la première direction de prise de vue, transmettre l'image au premier moyen de projection et représenter l'image sur la première surface de projection et calculer une image dans le deuxième ordinateur (34) telle qu'elle se présente en vertu de la position et de la deuxième direction de prise de vue, transmettre l'image au deuxième moyen de projection et produire l'image sur la deuxième surface de projection et
f) répéter les étapes b) à e).

2. Procédé selon la revendication 1, **caractérisé en ce que** les étapes b) à e) sont réalisées au moins plusieurs fois par seconde, notamment plus de 20 fois par secondes.

3. Procédé selon la revendication 1, **caractérisé en ce que** le signal de confirmation est délivré par le deuxième ordinateur (34) dès que le deuxième ordinateur a reçu l'information sur la position et la direction de prise de vue.

4. Procédé selon la revendication 1, **caractérisé en ce que** la conversion de la première direction de prise de vue en une deuxième direction de prise de vue (46) a lieu dans le premier ordinateur (32).

5. Procédé selon la revendication 1, **caractérisé en ce que** le montage de projection comporte une troisième surface de projection (24) et qu'est prévu au moins un autre ordinateur, à savoir un troisième ordinateur, qui est pourvu d'une mémoire de travail, qui est relié au réseau (54), qui est relié à un troisième moyen de projection (28), et qui permet de réaliser les étapes a), c), d) et e).

6. Procédé selon la revendication 1, **caractérisé en ce que** l'image du premier ordinateur (32) projetée par le premier moyen de projection (26) sur la première surface de projection (20) et l'image du deuxième ordinateur (34) projetée par le deuxième moyen de projection (26) sur la deuxième surface de projection (22) et éventuellement d'autres images sont reproduites à la même échelle et que les images de surfaces de projection voisines sont juxtaposées le long d'une arête située dans le sommet de l'angle formé par les surfaces de projection adjacentes de manière à coïncider exactement les unes avec les autres.

7. Procédé selon la revendication 1, **caractérisé en ce que** les ordinateurs utilisés sont des ordinateurs personnels et que le premier ordinateur fait office de serveur.

8. Dispositif destiné à la visualisation optique de scènes 3D mémorisées numériquement dans un montage de projection comportant une première surface de projection (20) et au moins une deuxième surface de projection (22) formant un angle avec la première surface de projection,
- avec un premier moyen de projection (26) qui est dirigé sur la première surface de projection (20) et qui projette sur celle-ci une première image de la scène 3D,
- avec un premier ordinateur (32), qui est relié au premier moyen de projection (26) qu'il commande et qui a une mémoire de travail, qui est relié à un périphérique d'entrée (38) destiné à entrer une position et une première direction de prise de vue et auquel est associée une mémoire de masse (56) dans laquelle est stockée au moins une scène 3D,
- avec un deuxième moyen de projection (26) qui est dirigé sur la deuxième surface de projection (22) et projette sur celle-ci une image de la scène 3D,
- avec un deuxième ordinateur (34) qui comporte une mémoire de travail et qui est relié au deuxième moyen de projection (26),
- avec un réseau (54) qui relie ensemble le premier ordinateur (32) et au moins un autre, deuxième ordinateur (34), un dispositif étant prévu qui convertit l'information sur la position et la première direction de prise de vue (44) en une information sur la position et une deuxième direction de prise de vue (46) qui est décalée par rapport à la première direction de prise de vue de l'angle et qui est disponible dans le deuxième ordinateur (34) par l'intermédiaire du réseau (54),
- avec des moyens destinés à délivrer un signal de confirmation moyennant le deuxième ordinateur (34) et à l'envoyer au premier ordinateur (32) et
- avec des moyens destinés à réitérer périodiquement l'interrogation du périphérique d'entrée (38) sur l'information sur la position et la première direction de prise de vue (44) qui y est disponible.

9. Procédé de visualisation optique de scènes 3D mémorisées de préférence numériquement, p. ex. de scènes 3D mémorisées sous forme de signal vidéo, dans un montage de projection comportant une première surface de projection (20) et au moins une deuxième surface de projection (22) formant un angle avec la première surface de projection,
- avec un premier moyen de projection (26) qui est dirigé sur la première surface de projection (20),
- avec un premier ordinateur (32), qui i) est relié au premier moyen de projection (26) qu'il commande, qui ii) a une mémoire de travail, qui iii) est relié à un périphérique d'entrée (38) et auquel iv) est associée une mémoire de masse (56) dans laquelle est stockée au moins une scène 3D,
- avec un deuxième moyen de projection (26) qui est dirigé sur la deuxième surface de projection (22),
- avec un deuxième ordinateur (34) qui comporte une mémoire de travail et qui est relié au deuxième moyen de projection (26),
- avec un réseau (54) qui relie ensemble le premier ordinateur (32) et le deuxième ordinateur (34), lequel procédé consiste à suivre les étapes suivantes
a) charger la scène 3D dans la mémoire de travail du premier ordinateur (32) et dans la mémoire de travail du deuxième ordinateur (34),
b) interroger le périphérique d'entrée (38) sur l'information entrée concernant le démarrage et le déroulement de la lecture par l'intermédiaire du premier ordinateur (32),
c) transmettre l'information au deuxième ordinateur (34) par l'intermédiaire du réseau (54)
d) délivrer un signal de confirmation moyennant le deuxième ordinateur (34) et l'envoyer au premier ordinateur (32),
e) calculer une image dans le premier ordinateur (32), transmettre l'image au premier moyen de projection et produire l'image sur la première surface de projection et
f) calculer une image dans le deuxième ordinateur (34), transmettre l'image au deuxième moyen de projection et produire l'image sur la deuxième surface de projection et
g) répéter les étapes b) à e).

10. Dispositif destiné à la visualisation optique de scènes 3D mémorisées numériquement dans un montage de projection comportant une première surface de projection (20) et au moins une deuxième surface de projection (22) formant un angle avec la première surface de projection,
- avec un premier moyen de projection (26) qui est dirigé sur la première surface de projection (20) et qui projette sur celle-ci une première image de la scène 3D,
- avec un premier ordinateur (32), qui est relié au premier moyen de projection (26) qu'il commande et qui a une mémoire de travail, qui est relié à un périphérique d'entrée (38) et auquel est associée une mémoire de masse (56) dans laquelle est stockée au moins une scène 3D,
- avec un deuxième moyen de projection (26) qui est dirigé sur la deuxième surface de projection (22) et projette sur celle-ci une image de la scène 3D,
- avec un deuxième ordinateur (34) qui comporte une mémoire de travail et qui est relié au deuxième moyen de projection (26),
- avec un réseau (54) qui relie ensemble le premier ordinateur (32) et au moins un autre, deuxième ordinateur (34), avec des moyens destinés à délivrer un signal de confirmation moyennant le deuxième ordinateur (34) et à l'envoyer au premier ordinateur (32) et
- avec des moyens destinés à réitérer périodiquement l'interrogation du périphérique d'entrée (38) sur l'information qui y est disponible.
